# EUROPEAN PATENT APPLICATION

(11) **EP 4 778 710 A1**
(43) Date of publication of application: **22.07.2026**
(21) Application number: 25213149.5
(22) Date of filing: 03.11.2025
(51) Int. Cl.: B29C 70/48, B29C 33/04, B29C 35/02, B29C 35/04, B29C 70/54

(54) **METHODS OF PERFORMING GAP RESIN INFUSION**

(30) Priority: 20.01.2025 US 202519032197
(71) Applicant: The Boeing Company, Arlington, VA 22202 (US)
(72) Inventor: Belcher, Stephen L., Arlington, 22202 (US)
(74) Representative: Witte, Weller & Partner Patentanwälte mbB

(57) **Abstract**

Methods of performing gap resin infusion are presented. A resin is injected into a resin infusion chamber of a resin infusion mold comprising a first portion and a second portion while maintaining a temperature differential between the first portion and the second portion. An infused preform is formed by forcing the resin into a dry fiber preform located in the resin infusion chamber while maintaining the temperature differential between the first portion and the second portion of the resin infusion mold.

## Description

### BACKGROUND INFORMATION

### 1. Field:

The present disclosure relates generally to composite manufacturing and more specifically to resin infusion in composite manufacturing.

### 2. Background:

In resin transfer molding (RMT), thermal masses and heat transfer coefficient of metallic tooling limit the heating rate of the internal surface temperature and component. Oil heaters, which are conventionally used, don't provide high ramp rates for high rate processing. As a result, low heating rates and excessive cycle times result from using existing oil heaters in large metallic tooling for composite RTM processing.

Therefore, it would be desirable to have a method and apparatus that takes into account at least some of the issues discussed above, as well as other possible issues. For example, it would be desirable to reduce cycle times for resin transfer molding.

### SUMMARY

An embodiment of the present disclosure provides a method of performing gap resin infusion. A resin is injected into a resin infusion chamber of a resin infusion mold comprising a first portion and a second portion while maintaining a temperature differential between the first portion and the second portion. An infused preform is formed by forcing the resin into a dry fiber preform located in the resin infusion chamber while maintaining the temperature differential between the first portion and the second portion of the resin infusion mold.

The method may further comprise removing the infused preform while maintaining the temperature differential. The resin infusion mold may comprise at least one resin port. The first portion may have a first temperature and the second portion has a second temperature, and wherein the first temperature is greater than the second temperature. Maintaining the temperature differential may comprise maintaining a first range of temperatures in a plurality of heating zones of the first portion. Maintaining the temperature differential may comprise maintaining a second range of temperatures in a plurality of heating zones of the second portion. The method may further comprise curing the resin in the infused preform while the infused preform is within the resin infusion chamber by maintaining the temperature differential. The temperature differential between the first portion and the second portion may be set based on a type of resin.

Another embodiment of the present disclosure provides a method of performing gap resin infusion. A dry fiber preform is infused with resin to form an infused preform by lowering a first portion of a resin infusion mold towards a second portion of the resin infusion mold while the first portion and the second portion are held at a temperature differential set based on a type of resin. The infused preform is held within the resin infusion mold while the first portion and the second portion are held at the temperature differential.

Holding the infused preform may comprise heating the resin by a first temperature of the first portion and a second temperature of the second portion. The first temperature may be greater than the second temperature. The method may further comprise injecting the resin into a resin infusion chamber of the resin infusion mold through a resin port located in the first portion of the resin infusion mold. The temperature differential may comprise maintaining a first range of temperatures in a plurality of heating zones of the first portion. The temperature differential may comprise maintaining a second range of temperatures in a plurality of heating zones of the second portion.

Yet another embodiment of the present disclosure provides a method of performing gap resin infusion. A first dry fiber preform is infused with resin in a resin infusion mold comprising a first portion and a second position, wherein the first portion and the second portion are held at a temperature differential to form a first infused preform. The first infused preform is removed from the resin infusion mold. A second dry fiber preform is infused with resin in the resin infusion mold while the first portion and the second portion of the resin infusion mold are held at a second temperature differential to form a second infused preform. The temperature differential is maintained between the first portion and the second portion of the resin infusion mold between infusion steps.

The method may further comprise holding the infused preform within the resin infusion mold while the first portion and the second portion are held at the temperature differential to increase tractability. The temperature differential may comprise a difference between a first temperature of the first portion and a second temperature of the second portion. It may further comprise introducing resin into a resin infusion chamber of the resin infusion mold through a resin port in the first portion of the resin infusion mold. The first portion may be an upper mold portion and wherein the first temperature is greater than the second temperature. The temperature differential may comprise maintaining a first range of temperatures in a plurality of heating zones of the first portion. The temperature differential may comprise maintaining a second range of temperatures in a plurality of heating zones of the second portion.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft in accordance with an illustrative embodiment;
**Figure 2** is an illustration of a block diagram of a manufacturing environment in accordance with an illustrative embodiment;
**Figure 3** is an illustration of a cross-sectional view through a resin infusion mold prior to resin infusion in accordance with an illustrative embodiment;
**Figure 4** is an illustration of a cross-sectional view through a resin infusion mold during resin injection in accordance with an illustrative embodiment;
**Figure 5** is an illustration of a cross-sectional view through a resin infusion mold during resin infusion in accordance with an illustrative embodiment;
**Figure 6** is an illustration of a cross-sectional view through a resin infusion mold following resin infusion in accordance with an illustrative embodiment;
**Figure 7** is a flowchart of a method of performing gap resin infusion in accordance with an illustrative embodiment;
**Figure 8** is a flowchart of a method of performing gap resin infusion in accordance with an illustrative embodiment;
**Figure 9** is a flowchart of a method of performing gap resin infusion in accordance with an illustrative embodiment;
**Figure 10** is an illustration of an aircraft manufacturing and service method in a form of a block diagram in accordance with an illustrative embodiment; and
**Figure 11** is an illustration of an aircraft in a form of a block diagram in which an illustrative embodiment may be implemented.

### DETAILED DESCRIPTION

The illustrative examples recognize and take into account several considerations. The illustrative examples recognize and take into account that "high rate" resin for aerospace applications may utilize a temperature "ramp" during the curing phase of the RTM process in order to deliver the desired mechanical properties. The illustrative examples recognize and take into account that resins for aerospace applications can have lower tolerance and higher technical demands during curing in comparison to other industries due to the desired mechanical properties.

The illustrative examples recognize and take into account that a "ramp" could feasibly be in the range of 30 degrees Celsius. The illustrative examples recognize and take into account that a ramp of approximately 30 degrees Celsius can produce a significant time penalty. The illustrative examples further recognize and take into account that a ramp of approximately 30 degrees Celsius results in an undesirably large heat energy consumption due to the mass of the molds. In some illustrative examples, the molds can be in the region of 50-60 tons.

The illustrative examples recognize and take into account that both the time penalty and heat energy consumption are highly undesirable in production. The illustrative examples recognize and take into account that both the time penalty and heat energy consumption will negate options to also manufacture the molds from cheaper steel materials than the aerospace standard of Invar.

The illustrative examples recognize and take into account that two part tooling systems use separate oil heating loops, meaning that they can be preheated to different temperatures. The illustrative examples provide methods of performing gap resin infusion with a resin infusion mold having a temperature differential between two mold halves.

The illustrative examples recognize and take into account that aerospace resins can use heat ramps to enable full material properties. The illustrative examples recognize and take into account that using traditional resin infusion processes, the production is too slow. The illustrative examples enable higher rate processing using existing equipment. The illustrative examples avoid having to heat up the tooling using standard temperature ramps. The illustrative examples delivers high rate output of composite components with low capital expenditure and energy reductions.

In some of the illustrative examples, the bottom tool portion is cooler while the upper tool portion has a higher temperature. In some of the illustrative examples, when the resin infusion mold is open, the lower temperature bottom tool will contain the resin during infusion. In some of the illustrative examples, once the gap is closed, the higher temperature top tool will come into contact with the composite and provide the thermal energy to raise the composite temperature rapidly, enabling higher rate production for RTM curing.

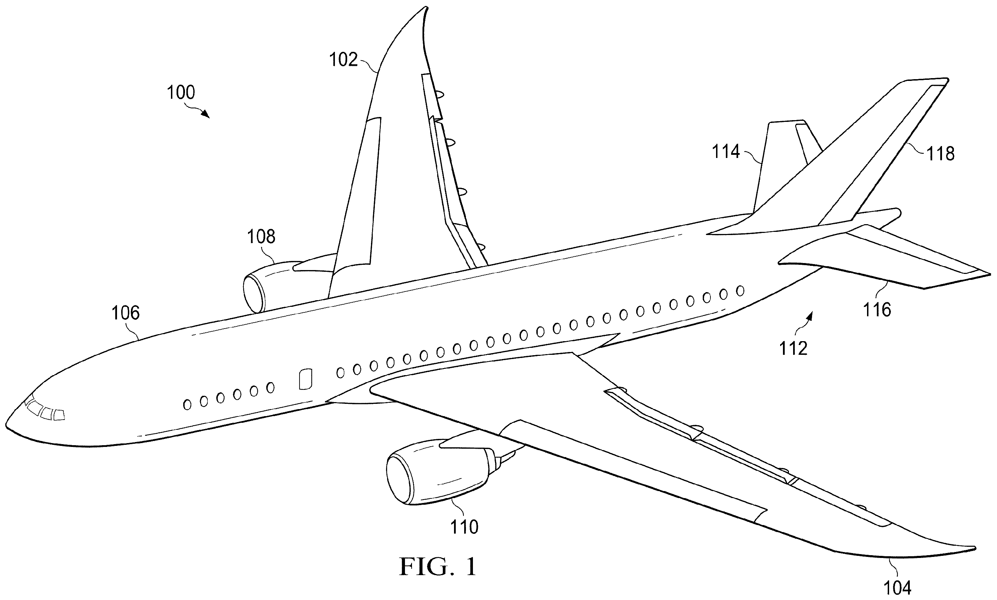

Turning now to **Figure 1****,** an illustration of an aircraft is depicted in accordance with an illustrative embodiment. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have components formed using resin transfer infusion of the illustrative examples. In some illustrative examples, at least of portion of at least one of wing **102,** wing **104,** or body **106** can be manufactured using the methods of the illustrative examples.

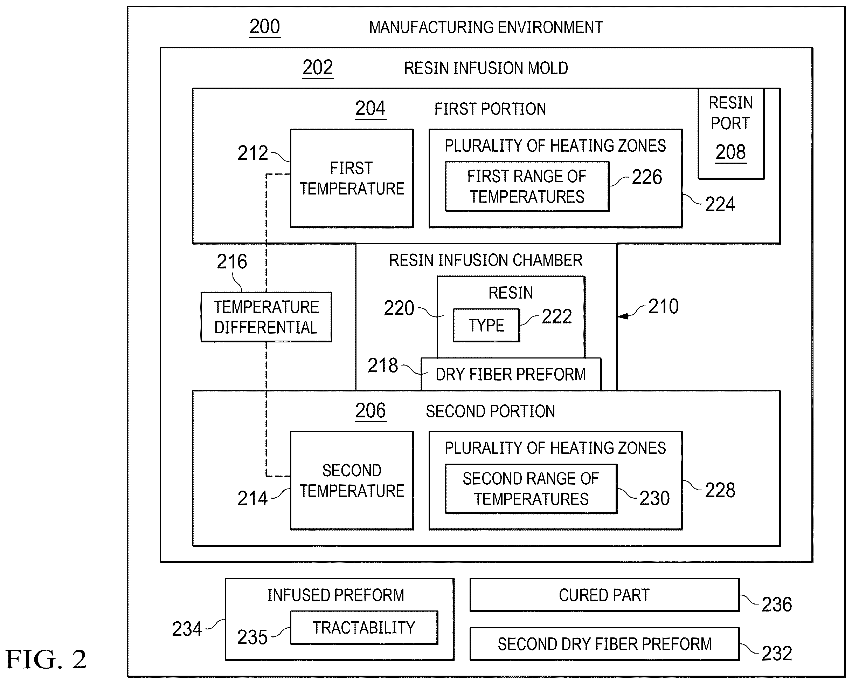

Turning now to **Figure 2****,** an illustration of a block diagram of a manufacturing environment is depicted in accordance with an illustrative embodiment. At least a portion of a composite structure of aircraft **100** can be manufactured in manufacturing environment **200.**

Resin infusion mold **202** comprises first portion **204** and second portion **206** configured to seal to form resin infusion chamber **210.** In some illustrative examples, first portion **204** and second portion **206** are a first half and a second half of resin infusion mold **202.** In some illustrative examples, first portion **204** can be referred to as a first half of resin infusion mold **202.** In some illustrative examples, second portion **206** can be referred to as a second half of resin infusion mold **202.** Dry fiber preform **218** is present in resin infusion chamber **210** to receive resin **220.** In this illustrative example, resin **220** is injected into resin infusion mold **202** through resin port **208.** In this illustrative example, resin port **208** is present in first portion **204** of resin infusion mold **202.** First portion **204** can be either an upper mold or a lower mold. First portion **204** is run at first temperature **212.** In some illustrative examples, first portion **204** comprises plurality of heating zones **224.** In these illustrative examples, first plurality of heating zones **224** is run at first range of temperatures **226.** First range of temperatures **226** can be set based on a design of dry fiber preform **218.** In some illustrative examples, first range of temperatures **226** can be set based on a range of thicknesses in dry fiber preform **218.**

Second portion **206** can be either an upper mold or a lower mold. Second portion **206** is run at second temperature **214.** Second temperature **214** is different from first temperature **212.** Temperature differential **216** is the difference between first temperature **212** and second temperature **214.** In some illustrative examples, second portion **206** comprises plurality of heating zones **228.** In these illustrative examples, second plurality of heating zones **228** is run at second range of temperatures **230.** Second range of temperatures **230** can be set based on a design of dry fiber preform **218.** In some illustrative examples, second range of temperatures **230** can be set based on a range of thicknesses in dry fiber preform **218.**

In some illustrative examples, first temperature **212** is greater than second temperature **214.** In some illustrative examples, an upper mold portion of first portion **204** or second portion **206** is run at a higher temperature than the lower mold portion. In some illustrative examples, the upper mold portion is used to contact dry fiber preform **218** from one side in order to deliver an increased cure temperature as resin infusion mold **202** is fully closed.

First temperature **212** and second temperature **214** are set based on type **222** of resin **220.** In some illustrative examples, the upper mold portion of either first portion **204** or second portion **206** runs at a substantially constant 170 degrees Celsius. In some illustrative examples, the lower mold portion runs at a substantially constant 140 degrees Celsius. Values of first temperature **212,** second temperature **214,** and temperature differential **216** are selected based on a desired level of curing following infusion of resin **220** into dry fiber preform **218.** In other illustrative examples, the upper mold portion runs at a lower temperature than a lower mold portion.

In some illustrative examples, resin infusion mold **202** closing delivers contact between a higher temperature mold portion and dry fiber preform **218,** heating dry fiber preform **218** from its initial lower temperature without needing to alter the temperature of either mold portion. When the upper mold is run at a higher temperature, the higher temperature mold briefly contacts injected resin **220.** When the upper mold is run at a higher temperature, dry fiber preform **218** is in contact with the lower temperature mold portion.

After infusing resin **220** into dry fiber preform **218,** the preform can be referred to as infused preform **234.** After infusing resin **220** into dry fiber preform **218,** infused preform **234** is maintained in resin infusion chamber **210** to increase tractability **235.** Tractability **235** is increased due to temperature differential **216.** In some illustrative examples, temperature differential **216** between first temperature **212** and second temperature **214** increases the rigidity of resin **220.** In some illustrative examples, infused preform **234** is held in resin infusion chamber **210** to partially cure resin **220** in infused preform **234.** In some illustrative examples, infused preform **234** is held in resin infusion chamber **210** to fully cure resin **220** and result in cured part **236.**

In some illustrative examples, after improving tractability **235** of infused preform **234,** infused preform **234** is removed from resin infusion mold **202.** In some illustrative examples, after improving tractability **235** of infused preform **234** by curing, cured part **236** is removed from resin infusion mold **202.**

In some illustrative examples, after removing an infused preform or cured part, another dry fiber preform is placed into resin infusion mold **202.** In some illustrative examples, after removing an infused preform or cured part, temperature differential **216** is maintained for resin infusion mold **202.** In some illustrative examples, second dry fiber preform **232** is placed into resin infusion chamber **210** after removal of infused preform **234.** In some illustrative examples, second dry fiber preform **232** can be infused with resin in resin infusion mold **202** while resin infusion mold **202** maintains temperature differential **216.**

By maintaining temperature differential **216** between first portion **204** and second portion **206,** the time between processing dry fiber preforms is significantly reduced. By maintaining temperature differential **216** between first portion **204** and second portion **206,** resin infusion mold **202** does not use a lengthy cool down between preforms.

The illustration of manufacturing environment **200 in** **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

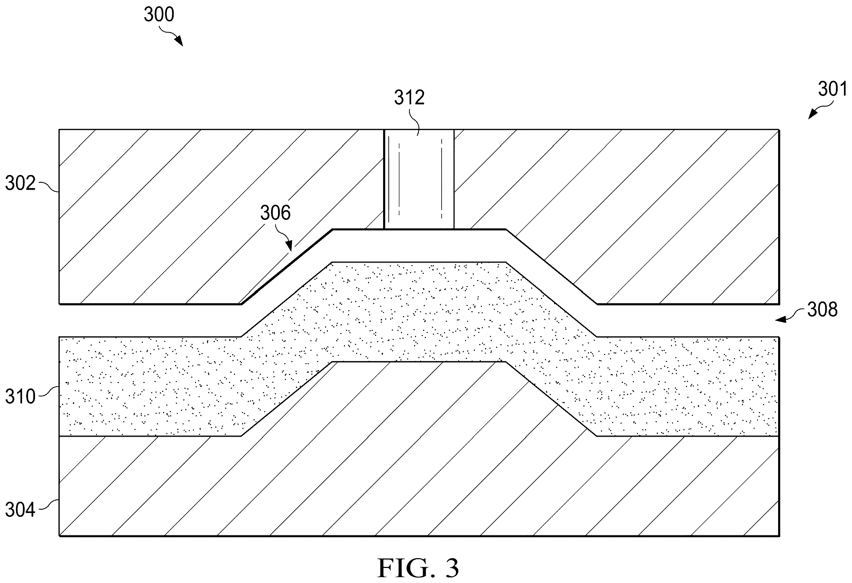

Turning now to **Figure 3****,** an illustration of a cross-sectional view through a resin infusion mold prior to resin infusion is depicted in accordance with an illustrative embodiment. Resin infusion mold **301** in view **300** can be a physical implementation of resin infusion mold **202 of** **Figure 2****.**

In view **300,** resin infusion mold **301** comprises first portion **302** and second portion **304** forming resin infusion chamber **306.** Although seals are depicted in view **300,** view **300** is a view of a portion of resin infusion mold **301.** In operation, seals are present to seal resin infusion chamber **306** for pressure control. During operation, vacuum can be pulled in resin infusion chamber **306** to infuse resin into dry fiber preform **310** in resin infusion chamber **306.** In this illustrative example, gap **308** is present between dry fiber preform **310** and first portion **302.**

In this illustrative example, resin port **312** is present in first portion **302.** Resin infusion port **312** can be positioned in any desirable location in resin infusion mold **301** depending upon at least a shape of dry fiber preform **310.**

In view **300,** first portion **302** is held at a first temperature while second portion **304** is held at a different second temperature. The temperature differential between first portion **302** and second portion **304** can be used to improve tractability of the resulting infused fiber preform.

In some illustrative examples, first portion **302** can comprise a plurality of heating zones maintaining a first range of temperatures. In some illustrative examples, second portion **304** can comprise a plurality of heating zones maintaining a second range of temperatures.

In some illustrative examples, the first temperature of first portion **302** is higher than the second temperature of second portion **304.** The temperature differential between the first temperature and the second temperature is selected to allow for desirable resin flow during injection and resin infusion and improving tractability following infusion.

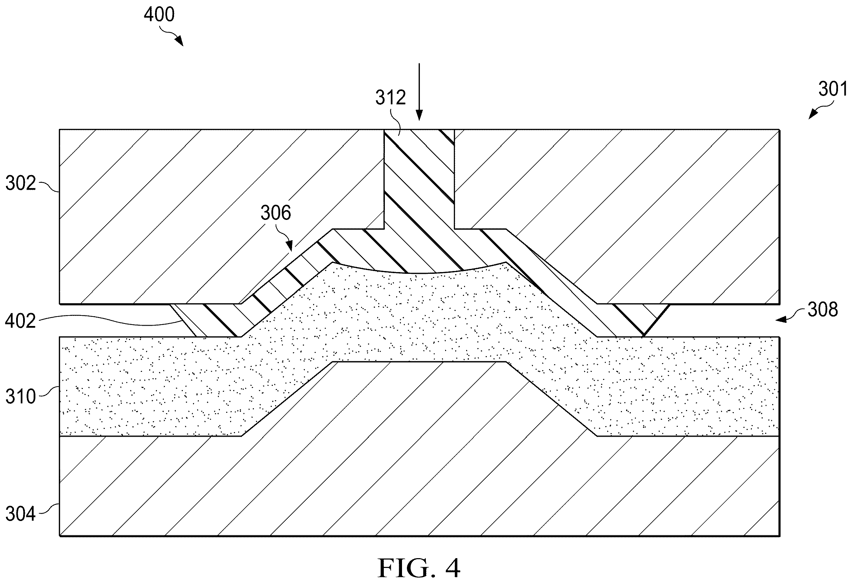

Turning now to **Figure 4****,** an illustration of a cross-sectional view through a resin infusion mold during resin injection is depicted in accordance with an illustrative embodiment. In view **400,** resin **402** is injected into resin infusion mold **301.** Resin **402** is injected into gap **308** through resin port **312.**

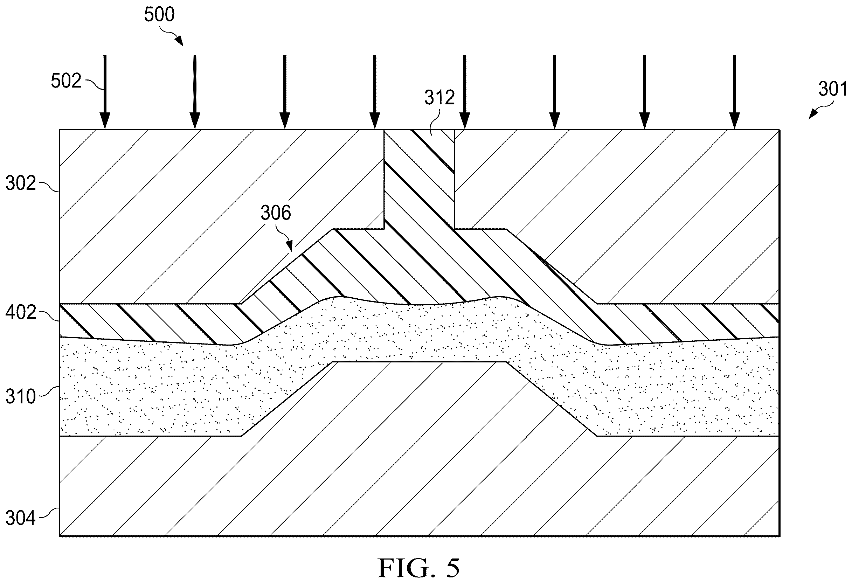

Turning now to **Figure 5****,** an illustration of a cross-sectional view through a resin infusion mold during resin infusion is depicted in accordance with an illustrative embodiment. In view **500,** first portion **302** moves in direction **502** towards second portion **304** to infuse resin **402** into dry fiber preform **310.**

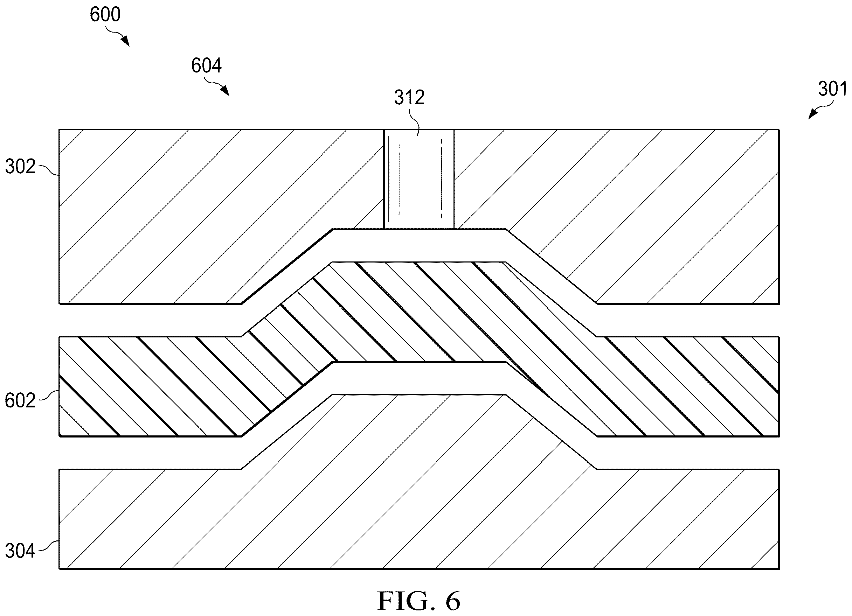

Turning now to **Figure 6****,** an illustration of a cross-sectional view through a resin infusion mold following resin infusion is depicted in accordance with an illustrative embodiment. In view **600,** infused preform **602** is removed from resin infusion mold **301.** In view **600,** resin infusion mold **301** is in open position **604** and is no longer sealed. In some illustrative examples, infused preform **602** is partially cured. In some illustrative examples, infused preform **602** is fully cured.

In some illustrative examples, first temperature of first portion **302** is substantially maintained after opening resin infusion mold **301.** In some illustrative examples, second temperature of second portion **304** is substantially maintained after opening resin infusion mold **301.**

By substantially maintaining the temperatures of first portion **302** and second portion **304,** time between infusing preforms can be reduced. By substantially maintaining the temperatures of first portion **302** and second portion **304,** costs can be reduced.

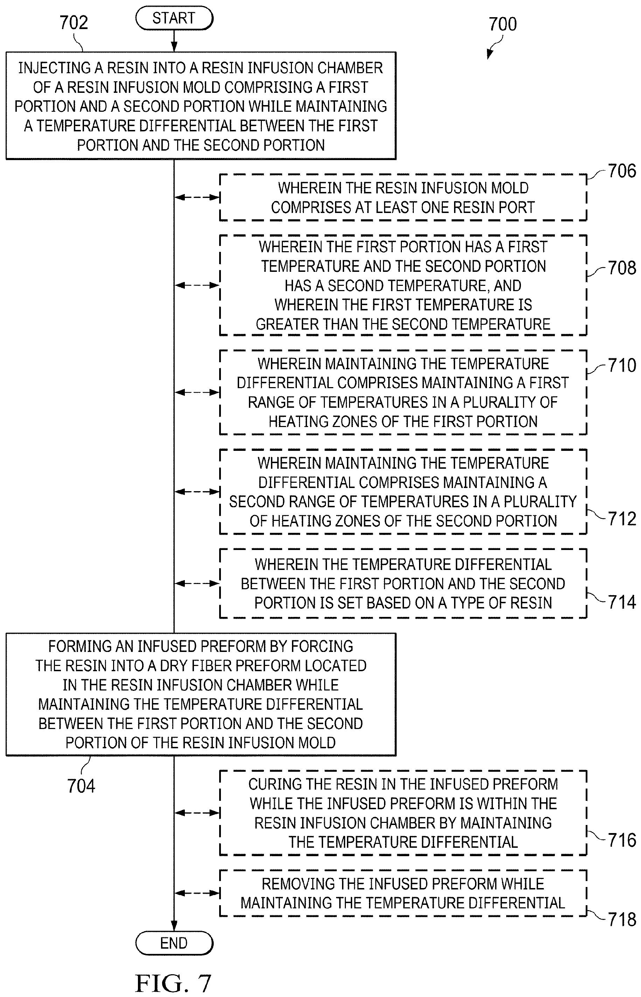

Turning now to **Figure 7****,** a flowchart of a method of performing gap resin infusion is depicted in accordance with an illustrative embodiment. Method **700** can be performed to form at least a portion of a composite component of aircraft **100 of** **Figure 1****.** Method **700** can be performed using resin infusion mold **202 of** **Figure 2****.** Method **700** can be performed using resin infusion mold **301 of** **Figures 3-6****.**

Method **700** injects a resin into a resin infusion chamber of a resin infusion mold comprising a first portion and a second portion while maintaining a temperature differential between the first portion and the second portion (operation **702).** Method **700** forms an infused preform by forcing the resin into a dry fiber preform located in the resin infusion chamber while maintaining the temperature differential between the first portion and the second portion of the resin infusion mold (operation **704).** Afterwards, method **700** terminates.

In some illustrative examples, method **700** removes the infused preform while maintaining the temperature differential (operation **718).** In some illustrative examples, method **700** maintains the temperature differential following removal of the infused preform. In some illustrative examples, method **700** maintains the temperature differential during subsequent infusion steps for subsequent preforms.

In some illustrative examples, the resin infusion mold comprises at least one resin port (operation **706).** In some illustrative examples, the first portion of the resin infusion mold comprises the at least one resin port. In some illustrative examples, an upper half of the resin infusion mold comprises the at least one resin port. In some illustrative examples, introducing the resin comprises introducing the resin through the at least one resin port.

In some illustrative examples, the first portion has a first temperature and the second portion has a second temperature, and wherein the first temperature is greater than the second temperature (operation **708).**

In some illustrative examples, maintaining the temperature differential comprises maintaining a first range of temperatures in a plurality of heating zones of the first portion (operation **710).** In some illustrative examples, maintaining the temperature differential comprises maintaining a second range of temperatures in a plurality of heating zones of the second portion (operation **712).**

In some illustrative examples, method **700** cures the resin in the infused preform while the infused preform is within the resin infusion chamber by maintaining the temperature differential (operation **716).** In some illustrative examples, method **700** partially cures the resin in the infused preform while the infused preform is within the resin infusion chamber by maintaining the temperature differential.

In some illustrative examples, the temperature differential between the first portion and the second portion is set based on a type of resin (operation **714).** In some illustrative examples, parts comprising the same type of resin are infused sequentially through the resin infusion mold while the resin infusion mold maintains the temperature differential.

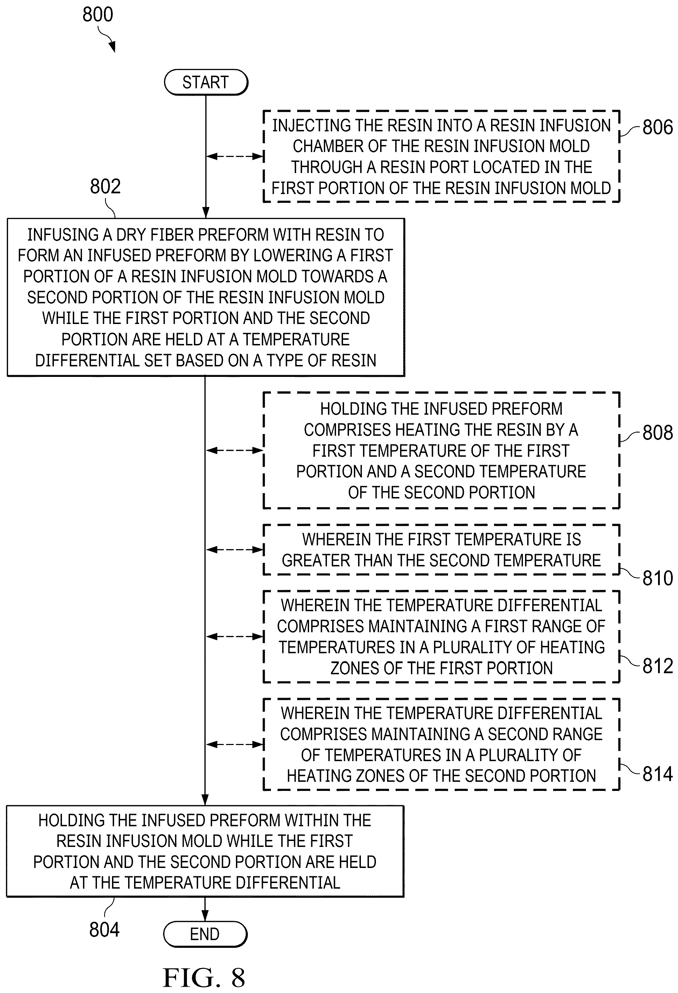

Turning now to **Figure 8****,** a flowchart of a method of performing gap resin infusion is depicted in accordance with an illustrative embodiment. Method **800** can be performed to form at least a portion of a composite component of aircraft **100 of** **Figure 1****.** Method **800** can be performed using resin infusion mold **202 of** **Figure 2****.** Method **800** can be performed using resin infusion mold **301 of** **Figures 3-6****.**

Method **800** infuses a dry fiber preform with resin to form an infused preform by lowering a first portion of a resin infusion mold towards a second portion of the resin infusion mold while the first portion and the second portion are held at a temperature differential set based on a type of resin (operation **802).** Method **800** holds the infused preform within the resin infusion mold while the first portion and the second portion are held at the temperature differential (operation **804).** Afterwards, method **800** terminates.

In some illustrative examples, method **800** injects the resin into a resin infusion chamber of the resin infusion mold through a resin port located in the first portion of the resin infusion mold (operation **806).** In other illustrative examples, the resin can be introduced into the resin infusion chamber of the resin infusion mold through a resin port in the second portion of the resin infusion mold.

In some illustrative examples, holding the infused preform within the resin infusion mold while the first portion and the second portion are held at the temperature differential increases tractability of the infused preform. In some illustrative examples, holding the infused preform comprises heating the resin by a first temperature of the first portion and a second temperature of the second portion (operation **808).** In some illustrative examples, increasing the tractability comprises heating the resin by a first temperature of the first portion and a second temperature of the second portion. In some illustrative examples, heating the resin by the first temperature can at least partially cure the resin. In some illustrative examples, heating the resin by the first temperature increase the rigidity of the resin infused preform.

In some illustrative examples, the first temperature is greater than the second temperature (operation **810).** In some illustrative examples, the temperature differential comprises maintaining a first range of temperatures in a plurality of heating zones of the first portion (operation **812).** In some illustrative examples, the temperature differential comprises maintaining a second range of temperatures in a plurality of heating zones of the second portion (operation **814).**

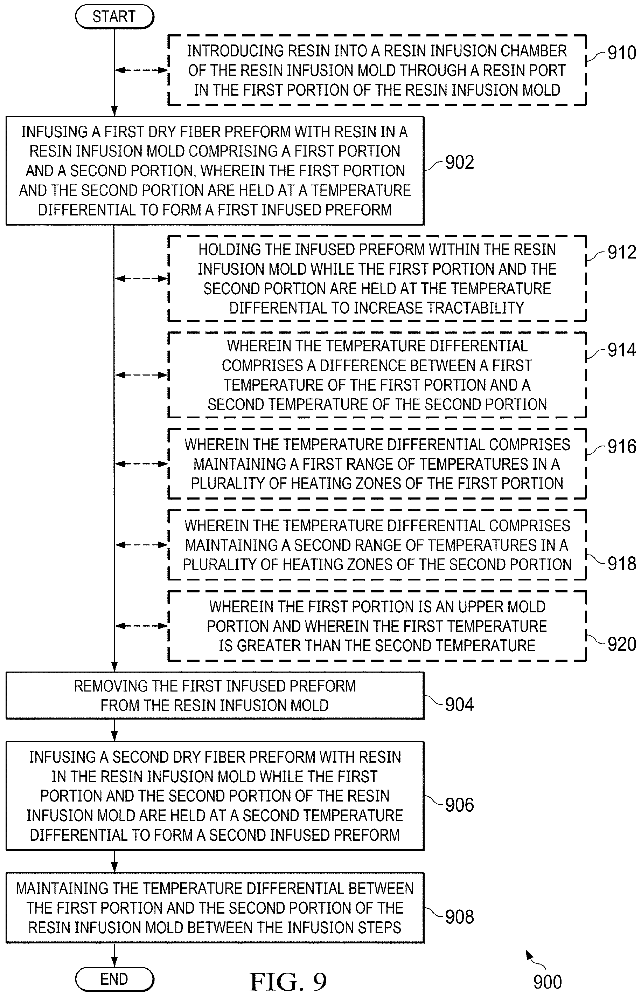

Turning now to **Figure 9****,** a flowchart of a method of performing gap resin infusion is depicted in accordance with an illustrative embodiment. Method **900** can be performed to form at least a portion of a composite component of aircraft **100** of **Figure 1****.** Method **900** can be performed using resin infusion mold **202** of **Figure 2****.** Method **900** can be performed using resin infusion mold **301** of **Figures 3-6****.**

Method **900** infuses a first dry fiber preform with resin in a resin infusion mold comprising a first portion and a second portion, wherein the first portion and the second portion are held at a temperature differential to form a first infused preform (operation **902).** Method **900** removes the first infused preform from the resin infusion mold (operation **904).** Method **900** infuses a second dry fiber preform with resin in the resin infusion mold while the first portion and the second portion of the resin infusion mold are held at a second temperature differential to form a second infused preform (operation **906).** Method **900** maintains the temperature differential between the first portion and the second portion of the resin infusion mold between infusion steps (operation **908).** Afterward, method **900** terminates.

In some illustrative examples, the temperature differential is the same as the second temperature differential. In some illustrative examples, the temperature differential and the second temperature differential are different based on a different type of resin used for the infusion of the second dry fiber preform.

In some illustrative examples, method **900** introduces resin into a resin infusion chamber of the resin infusion mold through a resin port in the first portion of the resin infusion mold (operation **910).** In some illustrative examples, pressure is used to send the resin into the resin infusion chamber. In some illustrative examples, introducing resin into the resin infusion chamber is referred to as injecting resin into the resin infusion chamber. In some illustrative examples, method **900** holds the infused preform within the resin infusion mold while the first portion and the second portion are held at the temperature differential to increase tractability (operation **912).** In some illustrative examples, the temperature differential comprises a difference between a first temperature of the first portion and a second temperature of the second portion (operation **914).**

In some illustrative examples, the temperature differential comprises maintaining a first range of temperatures in a plurality of heating zones of the first portion (operation **916).** In some illustrative examples, the temperature differential comprises maintaining a second range of temperatures in a plurality of heating zones of the second portion (operation **918).**

In some illustrative examples, the first portion is an upper mold portion and wherein the first temperature is greater than the second temperature (operation **920).**

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, each of operation **706** through operation **718** may be optional. As another example, each of operation **806** through operation **814** may be optional. Additionally, each of operation **910** through operation **920** may be optional.

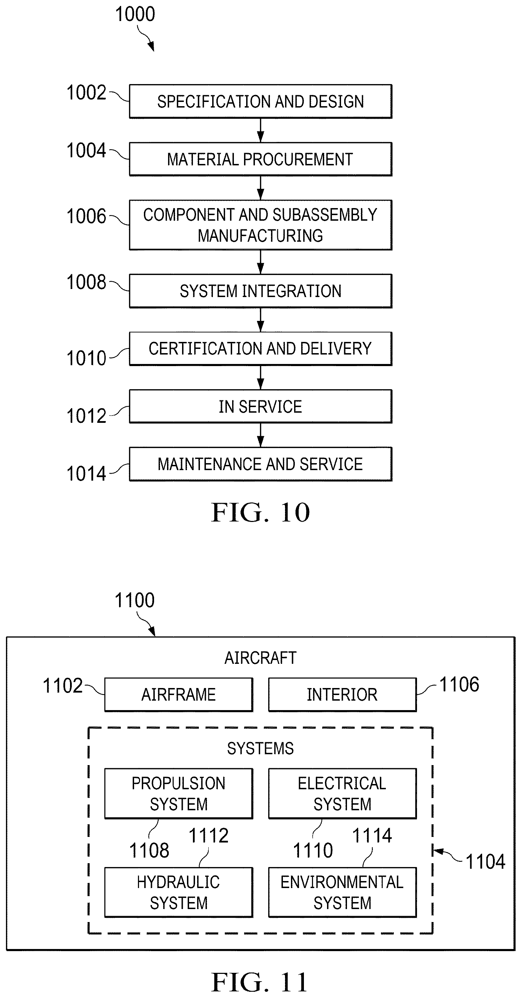

Illustrative embodiments of the present disclosure may be described in the context of aircraft manufacturing and service method **1000** as shown in **Figure 10** and aircraft **1100** as shown in **Figure 11****.** Turning first to **Figure 10****,** an illustration of an aircraft manufacturing and service method in a form of a block diagram is depicted in accordance with an illustrative embodiment. During pre-production, aircraft manufacturing and service method **1000** may include specification and design **1002** of aircraft **1100** in **Figure 11** and material procurement **1004.**

During production, component and subassembly manufacturing **1006** and system integration **1008** of aircraft **1100** takes place. Thereafter, aircraft **1100** may go through certification and delivery **1010** in order to be placed in service **1012.** While in service **1012** by a customer, aircraft **1100** is scheduled for routine maintenance and service **1014,** which may include modification, reconfiguration, refurbishment, or other maintenance and service.

Each of the processes of aircraft manufacturing and service method **1000** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 11****,** an illustration of an aircraft in a form of a block diagram is depicted in which an illustrative embodiment may be implemented. In this example, aircraft **1100** is produced by aircraft manufacturing and service method **1000 of** **Figure 10** and may include airframe **1102** with plurality of systems **1104** and interior **1106.** Examples of systems **1104** include one or more of propulsion system **1108,** electrical system **1110,** hydraulic system **1112,** and environmental system **1114.** Any number of other systems may be included.

Apparatuses and methods embodied herein may be employed during at least one of the stages of aircraft manufacturing and service method **1000.** One or more illustrative embodiments may be manufactured or used during at least one of component and subassembly manufacturing **1006,** system integration **1008,** in service **1012,** or maintenance and service **1014 of** **Figure 10****.**

The illustrative examples provide isothermal (constant or substantially constant mold temperature) processing while delivering the temperature ramp for resin chemistry to deliver a desired structural performance. The temperature profile during the process may be controlled and adjusted by manipulation of press closing. The parameters as well as mold portion temperatures are configured to deliver the cure cycle specific for the resin.

In some illustrative examples, the mold design detail can be adjusted to allow further adjust the heat transfer through the fiber part so full cure is achieved.

The illustrative examples can process resins with very high mechanical toughness. The illustrative examples can use a high performance resin while also delivering high output rates. The illustrative examples are able to reduce cost and increase throughput of aerospace parts.

The disclosure comprises embodiments according to the following clauses:
Clause 1. A method of performing gap resin infusion comprising:
   injecting a resin into a resin infusion chamber of a resin infusion mold comprising a first portion and a second portion while maintaining a temperature differential between the first portion and the second portion; and
   forming an infused preform by forcing the resin into a dry fiber preform located in the resin infusion chamber while maintaining the temperature differential between the first portion and the second portion of the resin infusion mold.
Clause 2. The method of clause 1, further comprising:
   removing the infused preform while maintaining the temperature differential.
Clause 3. The method of clause 1 or 2, wherein the resin infusion mold comprises at least one resin port.
Clause 4. The method of clause 3, wherein the first portion has a first temperature and the second portion has a second temperature, and wherein the first temperature is greater than the second temperature.
Clause 5. The method of any of clauses 1 to 4, wherein maintaining the temperature differential comprises maintaining a first range of temperatures in a plurality of heating zones of the first portion.
Clause 6. The method of any of clauses 1 to 5, wherein maintaining the temperature differential comprises maintaining a second range of temperatures in a plurality of heating zones of the second portion.
Clause 7. The method of any of clauses 1 to 6, further comprising:
   curing the resin in the infused preform while the infused preform is within the resin infusion chamber by maintaining the temperature differential.
Clause 8. The method of any of clauses 1 to 7, wherein the temperature differential between the first portion and the second portion is set based on a type of resin.
Clause 9. A method of performing gap resin infusion comprising:
   infusing a dry fiber preform with resin to form an infused preform by lowering a first portion of a resin infusion mold towards a second portion of the resin infusion mold while the first portion and the second portion are held at a temperature differential set based on a type of resin; and
   holding the infused preform within the resin infusion mold while the first portion and the second portion are held at the temperature differential.
Clause 10. The method of clause 9, wherein holding the infused preform comprises:
   heating the resin by a first temperature of the first portion and a second temperature of the second portion.
Clause 11. The method of clause 10, wherein the first temperature is greater than the second temperature.
Clause 12. The method of any of clauses 9 to 11, further comprising:
   injecting the resin into a resin infusion chamber of the resin infusion mold through a resin port located in the first portion of the resin infusion mold.
Clause 13. The method of any of clauses 9 to 12, wherein the temperature differential comprises maintaining a first range of temperatures in a plurality of heating zones of the first portion.
Clause 14. The method of any of clauses 9 to 13, wherein the temperature differential comprises maintaining a second range of temperatures in a plurality of heating zones of the second portion.
Clause 15. A method of performing gap resin infusion comprising:
   infusing a first dry fiber preform with resin in a resin infusion mold while a first portion and a second portion of the resin infusion mold are held at a temperature differential to form a first infused preform;
   removing the first infused preform from the resin infusion mold;
   infusing a second dry fiber preform with resin in the resin infusion mold while the first portion and the second portion of the resin infusion mold are held at a second temperature differential to form a second infused preform; and
   maintaining the temperature differential between the first portion and the second portion of the resin infusion mold between infusion steps.
Clause 16. The method of clause 15, further comprising:
   holding the infused preform within the resin infusion mold while the first portion and the second portion are held at the temperature differential to increase tractability.
Clause 17. The method of clause 15 or 16, wherein the temperature differential comprises a difference between a first temperature of the first portion and a second temperature of the second portion, wherein further comprising:
   introducing resin into a resin infusion chamber of the resin infusion mold through a resin port in the first portion of the resin infusion mold.
Clause 18. The method of clause 17, wherein the first portion is an upper mold portion and wherein the first temperature is greater than the second temperature.
Clause 19. The method of any of clauses 15 to 18, wherein the temperature differential comprises maintaining a first range of temperatures in a plurality of heating zones of the first portion.
Clause 20. The method of any of clauses 15 to 19, wherein the temperature differential comprises maintaining a second range of temperatures in a plurality of heating zones of the second portion.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method (700) of performing gap resin infusion comprising:
injecting (702) a resin (220) into a resin infusion chamber (210) of a resin infusion mold (202) comprising a first portion (204) and a second portion (206) while maintaining a temperature differential (216) between the first portion (204) and the second portion (206); and
forming (704) an infused preform (234) by forcing the resin (220) into a dry fiber preform (218) located in the resin infusion chamber (210) while maintaining the temperature differential (216) between the first portion (204) and the second portion (206) of the resin infusion mold (202).

2. The method of claim 1, further comprising:
removing (718) the infused preform (234) while maintaining the temperature differential (216).

3. The method of claim 1 or 2, wherein (706) the resin infusion mold (202) comprises at least one resin port (208).

4. The method of claim 3, wherein (708) the first portion (204) has a first temperature (212) and the second portion (206) has a second temperature (214), and wherein the first temperature (212) is greater than the second temperature (214).

5. The method of any of claims 1 to 4, wherein (710) maintaining the temperature differential (216) comprises maintaining a first range of temperatures (226) in a plurality of heating zones (224) of the first portion (204).

6. The method of any of claims 1 to 5, wherein (712) maintaining the temperature differential (216) comprises maintaining a second range of temperatures (230) in a plurality of heating zones (228) of the second portion (206).

7. The method of any of claims 1 to 6, further comprising:
curing (716) the resin (220) in the infused preform (234) while the infused preform (234) is within the resin infusion chamber (210) by maintaining the temperature differential (216).

8. The method of any of claims 1 to 7, wherein the temperature differential (216) between the first portion (204) and the second portion (206) is set based on a type of resin (714).

9. A method (800) of performing gap resin infusion comprising:
infusing (802) a dry fiber preform (218) with resin to form an infused preform (234) by lowering a first portion (204) of a resin infusion mold (202) towards a second portion (206) of the resin infusion mold (202) while the first portion (204) and the second portion (206) are held at a temperature differential (216) set based on a type (222) of resin (220); and
holding (804) the infused preform (234) within the resin infusion mold (202) while the first portion (204) and the second portion (206) are held at the temperature differential (216).

10. The method of claim 9, wherein holding the infused preform (234) comprises (808):
heating the resin (220) by a first temperature (212) of the first portion (204) and a second temperature (214) of the second portion (206).

11. The method of claim 10, wherein (810) the first temperature (212) is greater than the second temperature (214).

12. The method of any of claims 9 to 11, further comprising (806):
injecting the resin (220) into a resin infusion chamber (210) of the resin infusion mold (202) through a resin port (208) located in the first portion (204) of the resin infusion mold (202).

13. The method of any of claims 9 to 12, wherein the temperature differential (216) comprises maintaining a first range of temperatures (226) in a plurality of heating zones (224) of the first portion (812).

14. The method of any of claims 9 to 13, wherein the temperature differential (216) comprises maintaining a second range of temperatures (230) in a plurality of heating zones (228) of the second portion (814).

15. A method (900) of performing gap resin infusion comprising:
infusing (902) a first dry fiber preform (218) with resin (220) in a resin infusion mold (202) while a first portion (204) and a second portion (206) of the resin infusion mold (202) are held at a temperature differential (216) to form a first infused preform (234);
removing (904) the first infused preform (234) from the resin infusion mold (202);
infusing (906) a second dry fiber preform (232) with resin (220) in the resin infusion mold (202) while the first portion (204) and the second portion (206) of the resin infusion mold (202) are held at a second temperature differential to form a second infused preform; and
maintaining (908) the temperature differential (216) between the first portion (204) and the second portion (206) of the resin infusion mold (202) between infusion steps.
